(19) Europäisches Patentamt
European Patent Office
Office européen des brevets

(11) Veröffentlichungsnummer : **0 117 970 B1**

# (12) EUROPÄISCHE PATENTSCHRIFT

(45) Veröffentlichungstag der Patentschrift : **02.03.88**

(51) Int. Cl.⁴ : **E 21 B 43/22**

(21) Anmeldenummer : **84100114.2**

(22) Anmeldetag : **07.01.84**

## (54) Verfahren zur Gewinnung von Öl aus Speichergestein.

(30) Priorität : **04.03.83 DE 3307712**

(43) Veröffentlichungstag der Anmeldung : **12.09.84 Patentblatt 84/37**

(45) Bekanntmachung des Hinweises auf die Patenterteilung : **02.03.88 Patentblatt 88/09**

(84) Benannte Vertragsstaaten : **AT DE FR GB NL**

(56) Entgegenhaltungen :
**EP-A- 0 073 894**
**DE-A- 3 105 913**
**DE-C- 3 033 927**
**FR-A- 2 495 219**

(73) Patentinhaber : **HÜLS AKTIENGESELLSCHAFT**
**Patentabteilung / PB 15 - Postfach 13 20**
**D-4370 Marl 1 (DE)**

(72) Erfinder : **Balzer, Dieter, Dr.**
**Talstrasse 21**
**D-4358 Haltern (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Bei der Gewinnung von Öl aus Speichergestein gelingt es im allgemeinen nur, einen Bruchteil des ursprünglich vorhandenen Öls durch primäre Gewinnungsverfahren zu fördern. Hierbei gelangt das Öl infolge des natürlichen Lagerstättendrucks an die Erdoberfläche. Bei der sekundären Ölgewinnung wird Wasser in eine oder mehrere Injektionsbohrungen der Formation eingepreßt und das Öl zu einer oder mehreren Produktionsbohrungen getrieben und sodann an die Erdoberfläche gebracht. Dieses sogenannte Wasserfluten als Sekundärmaßnahme ist relativ billig und wird entsprechend häufig eingesetzt, führt jedoch in vielen Fällen nur zu einer geringen Mehrentölung der Lagerstätte.

Eine wirksame Verdrängung des Öls, die teurer, jedoch im Hinblick auf die gegenwärtige Ölverknappung volkswirtschaftlich dringend erforderlich ist, gelingt durch tertiäre Maßnahmen. Darunter sind Verfahren zu verstehen, bei denen entweder die Viskosität des Öls erniedrigt und/oder die Viskosität des nachflutenden Wassers erhöht und/oder die Grenzflächenspannung zwischen Wasser und Öl erniedrigt werden.

Die meisten dieser Prozesse lassen sich entweder als Lösungs- oder Mischungsfluten, thermische Ölgewinnungsverfahren, Tensid- oder Polymerfluten bzw. als Kombination von mehreren der genannten Verfahren einordnen.

Thermische Gewinnungsverfahren beinhalten die Injizierung von Dampf oder heißem Wasser bzw. sie erfolgen als Untertage-Verbrennung. Lösungs- oder Mischungsverfahren bestehen im Injizieren eines Lösungsmittels für das Erdöl in die Lagerstätte, wobei dies ein Gas und/oder eine Flüssigkeit sein kann.

Tensidprozesse — je nach Tensidkonzentration, gegebenenfalls Tensidtyp und Zusätzen unterscheidet man tensidgestütztes Wasserfluten, übliches Tensidfluten (Lowtension flooding), micellares Fluten und Emulsionsfluten — beruhen in erster Linie auf einer starken Erniedrigung der Grenzflächenspannung zwischen Öl und Flutwasser. In einigen Fällen jedoch, insbesondere in Gegenwart höherer Tensidkonzentrationen, entstehen Wasser-in-Öl-Dispersionen mit, verglichen zum Öl, deutlich erhöhter Viskosität, so daß hier das Tensidfluten auch auf eine Verkleinerung des Mobilitätsverhältnisses zielt, wodurch der Wirkungsgrad der Ölverdrängung erhöht wird. Reines Polymerfluten beruht überwiegend auf dem zuletzt beschriebenen Effekt des günstigeren Mobilitätsverhältnisses zwischen Öl und nachflutendem Wasser.

Die vorliegende Erfindung bezieht sich auf ein Verfahren zur Gewinnung von Öl durch Tensid- bzw. Emulsionsfluten. Als ölmobilisierende Tenside wurden bislang vor allem organische Sulfonate, wie Alkyl-, Alkylaryl- oder Petroleumsulfonate, beschrieben. Diese besitzen jedoch eine sehr niedrige Toleranzgrenze gegenüber der Salinität der Lagerstättenwässer. Bereits Salzkonzentrationen von 1 000 ppm gelten als problematisch, wobei die Empfindlichkeit dieser Tenside gegenüber Erdalkaliionen besonders ausgeprägt ist. Hier wird als obere kritische Grenzkonzentration ca. 500 ppm angenommen (US-PS 4 110 228). In Gegenwart höherer Salzkonzentrationen bilden sich bei Einsatz dieser Tenside Fällungsprodukte in Form unlöslicher Salze. Hierdurch geht einmal Substanz für die erwünschte Wirkung in der Grenzfläche Öl-Wasser verloren, zum anderen können die Fällungsprodukte zu Verstopfungen der Formation führen. Da jedoch viele Lagerstättenwässer wesentlich höhere Salinitäten besitzen — etwa die Hälfte der nordamerikanischen Leichtölöagerstätten besitzt Salinitäten um 100 000 ppm und höher, in Norddeutschland gibt es viele Ölfelder mit Salinitäten bis zu ca. 250 000 ppm, wobei in den meisten Fällen der Gehalt an gelösten Erdalkaliionen beträchtlich ist, hat man nach Wegen gesucht, die sonst gut ölmobilisierenden Eigenschaften der organischen Sulfonate auch für höher salinare Lagerstättensysteme nutzbar zu machen. Im Gemisch mit Cosurfactants, wie Alkoholen oder nichtionischen Tensiden, zeigten sich organische Sulfonate auch weniger elektrolytempfindlich.

Entsprechend den US-PSS 4 016 932 und 3 811 504 gelingt es, die Salinitätstoleranz der organischen Sulfonate im Gemisch mit anderen Tensiden weiter zu steigern.

Im Gegensatz zur Gruppe der organischen Sulfonate zeigen die carboxymethylierten Alkyl- bzw. Alkylaryloxethylate ebenso wie die Gruppe der sulfatierten und sulfonierten Oxethylate (US-PS 4 293 428) eine gute Verträglichkeit selbst mit extrem hochsalinaren Lagerstättenwässern (250 000 ppm und höher). Erdalkaliionen selbst bei Konzentrationen von 30 000 ppm besitzen keinen nachteiligen Effekt ; im Gegenteil ihre Anwesenheit ist sogar erwünscht, wie in der DE-PS 30 33 927 gezeigt wird. Da diese Tenside stark ölmobilisierend wirken, unter Lagerstättenbedingungen — wie Langzeittests ergeben haben — stabil sind (vgl. D. Balzer, Proceedings 2$^{nd}$ European Symposium Enhanced Oil Recovery, Paris 1982) sowie ihre Herstellung einfach und wirtschaftlich ist, sind sie für den Einsatz bei der Ölverdrängung in mittel — und hochsalinaren Lagerstättensystemen (10 000 bis 250 000 ppm Gesamtsalzgehalt) sehr geeignet.

Beim Tensidfluten besteht jedoch nicht nur eine Problematik bezüglich höherer Salinität der Lagerstätte, die durch Einsatz carboxymethylierter Oxethylate als Tenside überwunden wurde, sondern es liegt auch ein beträchtliches Problem in der stets auftretenden Tensidretention. Durch Adsorption an der Gesteinsoberfläche und durch das sogenannte « Phasetrapping », ein Einfangen von Flüssigkeitstropfen mit häufig hohem Tensidgehalt im Gestein vor Porenverengungen, geht eine beträchtliche Menge an injiziertem Tensid verloren. Die beiden Prozesse tragen in hohem Maße zur Tensidretention bei, womit letztlich die Gesamtmenge des im Porenraum während des Tensidflutens zurückgehaltenen Tensids gemeint ist. Eine wirtschaftliche Gewinnung von Öl durch tertiäre Methoden mit Hilfe von

Tensiden setzt daher voraus, daß sowohl die Tenside hochwirksam sind als auch ihre Retention gering ist.

In der Literatur werden mehrere Verfahren beschrieben, bei denen eine erniedrigte Tensidretention dadurch bewirkt wird, daß entweder der Tensidlösung bzw. -dispersion ein zusätzlicher Wirkstoff vorangeflutet oder ihr zugemischt wird. So erniedrigt Ligninsulfonat selbst (vgl. US-PS 4 157 115) oder in ethoxylierter bzw. propoxylierter Form (vgl. US-PS 4 236 579) oder in sulfomethylierter Form (vgl. US-PS 4 269 270) die Tensidadsorption an der Gesteinsoberfläche. Ähnlich wirken auch Maleinate und Succinate (vgl. US-PS 4 217 958). Auch ein Vorfluten mit einer wäßrigen LiCl-Lösung soll bei Tensidmischungen aus Petroleumsulfonat und Ethersulfonat die Retention erniedrigen (vgl. US-PS 4 281 714). Allerdings wirken diese « Opfersubstanzen » in erster Linie adsorptionsvermindernd und der Adsorptionsprozeß ist nur einer von vielen Prozessen, die zur Retention beitragen. Stark retentionsmindernd zumindest bei niedersalinaren Lagerstättensystemen und Petroleumsulfonaten als Tensid wirken offenbar vorgeflutete Lösungen aus Natriumcarbonat oder Natriumorthosilikat, wie in mehreren wissenschaftlichen Veröffentlichungen gezeigt wird (z. B. J. S. Falcone et al., JAOCS 59, 826 A (1982). Die Injektion einer stark alkalischen Lösung bedeutet aber auch ein massives Eingreifen in die komplizierten Gleichgewichte einer Lagerstätte. Der Verwendung dieser Lösungen haftet daher eine ähnliche Problematik an wie dem Prozeß des Alkalifluten.

Auch das Tensidfluten mit carboxymethylierten Oxethylaten, wie es in DE-A 3033 927 beschrieben wird, enthält noch ein beträchtliches Problem wegen der stets auftretenden Tensid-Retention. Durch Adsorption an Gesteinsobenflächen und durch das bekannte « phase-trapping » gehen insgesamt hohe Mengen an vergleichsweise wertvollem Tensid verloren.

Eine fühlbare Verminderung der Tensidretention erzielt man durch ein modifiziertes Tensidflutverfahren unter Verwendung von carboxymethylierten Oxethylaten, indem man das Tensid in Form einer möglichst systembezogenen Emulsion (d. h. Lagerstättenwasser als wäßrige und Lagerstättenöl als organische Phase) injiziert. Wird hierbei das Tensid bzw. der Emulgator so ausgewählt, daß die Phasen-Inversions-Temperatur des Systems Rohöl/Formationswasser/Tensid (Emulgator) bei der Lagerstättentemperatur oder bis zu ca. 10 °C darüber liegt, so läßt sich mit diesem Emulsionsflutverfahren eine weitgehende Reduzierung des ursprünglich vorhandenen Öls erzielen, ohne daß sich hierbei unbeherrschbar hohe Druckgradienten ausbilden (DE-A 31 05 913). Ein Nachteil dieses Verfahrens besteht jedoch darin, daß ein Teil des als Emulsion injizierten Öls, der, verglichen mit dem tertiär gewinnbaren Öl, nicht unerheblich ist, nicht wieder ausgeflutet wird. Die für den Ölproduzenten auch aufgrund der erheblichen Zeitspanne (Jahre) zwischen Injektion und Produktion hohe psychologische Barriere der Wiederinjektion von aufwendig gefördertem (oder zugekauftem) Öl wird hierdurch noch sehr viel schwerer überwindbar.

In FR-A 2 495 219 wird zwar die Möglichkeit erwähnt, Tensidfluten mit Emulsionsfluten zu kombinieren, jedoch kann daraus keine Anregung hergeleitet werden, das Tensidfluten gemäß DE-A 3033 927 mit dem Emulsionsfluten gemäß DE-A 3105 913 zu verknüpfen.

Einerseits enthält FR-A 2 495 219 keine Beispiele, wobei Tensidfluten und Emulsionsfluten kombiniert werden und andererseits sind die in FR-A 2 495 219 als Tenside verwendeten Schwerölsulfonate nicht mit den in DE-A 3105 913 und DE-A 3033 927 eingesetzten carboxymethylierten Oxethylaten zu vergleichen. Beim Verfahren des gemäß FR-A 2 495 219 bestand zudem eine völlig andere Aufgabenstellung.

Es bestand daher die Aufgabe, für die bei mittel- bis hochsalinaren Lagerstätten stark ölmobilisierend wirkenden carboxymethylierten Oxethylate eine Vorgehensweise zu finden, die zu einer ähnlich geringen Tensidretention führt wie das Emulsionsfluten, ohne daß deshalb eine große Ölmenge in die Lagerstätte eingepreßt werden muß.

Diese Aufgabe wurde gelöst durch ein Verfahren, wie es in den Patentansprüchen dargestellt ist. Ihnen zufolge wurde überraschend beobachtet, daß beim Tensidfluten mit carboxymethylierten Oxyethylaten ähnlich niedrige Tensidretentionswerte wie beim Emulsionsfluten beobachtet werden, wenn vor dem Einpressen des Tensidslugs ein Emulsionsslug injiziert wird, der relativ kleinvolumig sein kann.

Ähnlich vorteilhaft für die Tensidretention ist auch ein nach der Injektion des Tensidslugs eingepreßter kleinvolumiger Emulsionsslug. Selbstverständlich lassen sich diese beiden Verfahrensvarianten auch kombinieren.

In der DE-OS 31 05 913 wird gezeigt, daß die carboxymethylierten Oxethylate auch in Gegenwart hochsalinarer Lagerstättenwässe stabile Emulsionen bilden. Ebenfalls wird dort gezeigt, wie man diese Tenside an die Verhältnisse einer Lagerstätte so anpassen kann, daß keine unbeherrschbar hohen Druckgradienten auftreten. Einer Injektion des Emulsions- bzw. des Tensidslugs werden also keine besonderen Schwierigkeiten gegenüberstehen.

Kriterium der Anpassung des Tensides an die Verhältnisse ist die Phasen-Inversions-Temperatur (PIT) sowohl der eingepreßten Emulsion bzw. Emulsionen als auch der des Lagerstättensystems Rohöl/Formationswasser/Tensid/gegebenenfalls Zusätze, deren Werte etwa 0 bis 10 °C oberhalb der Lagerstättentemperatur liegen sollen.

Die PITs werden durch Messung der elektrischen Leitfähigkeit bestimmt. Zur Messung der PIT der Lagerstättenemulsion werden Lagerstättenöl, Formationswasser (Volumenverhältnisse o/w 1 : 1, 1 : 2 oder 1 : 3) und das Tensid des Tensidslugs (1 oder 2 Gew.-%, bezogen auf die wäßrige Phase) sowie gegebenenfalls Zusätze mit einander vermischt und ihre elektrische Leitfähigkeit abhängig von der

Temperatur gemessen. Bei der PIT schlägt eine o/w-Emulsion in eine w/o-Emulsion und bzw. umgekehrt, wobei die elektrische Leitfähigkeit stark abnimmt oder zunimmt. Registriert als PIT wir die Temperatur, bei der die elektrische Leitfähigkeit den Mittelwert zwischen oberem (o/w) und unterem (w/o) Niveau erreicht.

In seltenen Fällen von Lagerstättensystemen bereitet die eindeutige Festlegung eines PIT-Wertes Schwierigkeiten, so daß es zweckmäßig sein kann, die PIT-Messungen durch Grenzflächenspannungsmessungen zu ergänzen.

Wird bei der zu injizierenden Emulsion ein anderes Tensid verwendet als bei dem Tensidslug, oder wird mit veränderten Zusätzen gearbeitet, so ist auch die PIT dieses Tensidsystems in Gegenwart von Lagerstättenöl und Formations- bzw. Flutwasser, wie vorstehend beschrieben, zu messen.

Wird bei der zu injizierenden Emulsion ein anderes Öl oder Wasser verwendet, so ist auch die PIT dieser betreffenden Emulsion wie vorstehend zu messen. Im Extremfall kann es also eine Reihe von unterschiedlichen PITs geben, für die gelten soll, daß sie bei oder bis ca. 10 °C oberhalb der Lagerstättentemperatur liegen.

Die vorliegende Erfindung bezieht sich auf den Einsatz von carboxymethylierten Oxethylaten als ölmobilisierend und emulgierend wirkende Tenside. Man kann diese Verbindungen nach der DE-PS 24 18 144 durch Umsetzung von Oxethylaten der Formel $R—(OC_2H_4)_nH$ oder $R—(OC_2H_3(CH_3))_m(OC_2H_4)_nH$ mit einem Salz der Chloressigsäure in Gegenwart von Alkalihydroxid oder anderen Basen herstellen. Aber auch andere Herstellungsverfahren sind geeignet. R bedeutet hierbei einen gesättigten oder ungesättigten, geradkettigen oder verzweigten Alkylrest mit 6 bis 20, vorzugsweise 8 bis 16, C-Atomen oder einen Alkylarylrest mit 3 bis 18, vorzugsweise 4 bis 16 C-Atomen in der Alkylkette oder einen Dialkylarylrest mit 1 bis 18, vorzugsweise 4 bis 14 C-Atomen pro Alkylkette, wobei die Gesamtzahl der C-Atome in beiden Alkylketten 5 bis 30, vorzugsweise 8 bis 24, sein soll, oder einen trialkylaromatischen Rest mit 1 bis 18 C-Atomen pro Alkylkette, wobei die Gesamtzahl der C-Atome in den 3 Alkylketten 6 bis 40, vorzugsweise 8 bis 30, sein soll. m kann Werte von 0 bis 20, vorzugsweise von 0 bis 10, annehmen. n kann Werte von 1 bis 30, vorzugsweise 1 bis 20, annehmen. Das Kation kann Natrium, Kalium, Lithium, Ammonium, Calcium oder Magnesium sein. Als Alkohole, deren Oxethylate den Carboxymethylaten zugrunde liegen, lassen sich z. B. einsetzen : Hexylalkohol, Octylalkohol, Nonylalkohol, Decylalkohol, Undecylalkohol, Lauryl-, Tridecyl-, Myristil-, Palmityl- und Stearylalkohol, aber auch ungesättigte Alkohole, wie z. B. Oleylalkohol. Die Alkylkette kann dabei normal- oder verzweigtkettig sein. Als Alkylphenole lassen sich z. B. einsetzen : Butylphenol, Pentylphenol, Hexylphenol, Octyphenol, Nonylphenol, Decylphenol, Undecylphenol, Dodecylphenol, Tridecylphenol, sowie die entsprechenden Dialkylphenole, wie z. B. 2-Methyl-4-Tridecylphenol, 2-Dodecyl-4-Ethylphenol, Dinonylphenol, etc. Die Alkylkette kann normal oder verzweigt sein.

Die Oxethylierung kann in Gegenwart katalytischer Mengen Alkalihydroxid mit 0 bis 20, vorzugsweise 0 bis 10, Mol Propylenoxid/Mol Hydroxylverbindung und danach mit 1 bis 30, vorzugsweise 1 bis 20, Mol Ethylenoxid/Mol Hydroxylverbindung durchgeführt werden. Die so entstehenden Oxethylate sind Homologengemische. Die sich anschließende Carboxymethylierung kann bei entsprechender Fahrweise vollständig sein, so daß die carboxymethylierten Oxethylate rein anionische Tenside sind. Alternativ bei nicht vollständiger Carboxymethylierung enthalten die Produkte noch mehr oder minder große Mengen nicht umgesetztes Oxethylat. Mit der Formel $R—(OC_3H_6)_m(OC_2H_4)_nOCH_2COOMe$ ist daher häufig ein Gemisch mit unterschiedlichen Mengen an nicht umgesetztem Oxethylat gemeint. Demgemäß läßt sich ein Carboxymethylierungsgrad dafinieren. Es hat sich gezeigt, daß Mischungen mit einem Carboxymethylierungsgrad zwischen 10 und 100 %, vorzugsweise zwischen 50 und 100 %, das Öl wirksam zu verdrängen vermögen. Zur Vermeidung einer chromatographischen Auftrennung beim Transport des Tensides in der Lagerstätte sind möglichst einheitliche Produkte, d. h. mit einem Carboxymethylierungsgrad nahe 100 % anzustreben.

Mit der Angabe % sind Gewichtsprozente gemeint.

Die beschriebenen Mischungen aus anionischem und meist nichtionischem Tensid, carboxymethylierte Oxethylate genannt, sind in üblichen Lagerstättenwässern löslich oder zumindest gut dispergierbar, wobei keinerlei Ausfällungen beobachtet werden.

Bei ihrer Auswahl geht man nun folgendermaßen vor :

Bei Kenntnis der Lagerstättentemperatur bzw. gegebenenfalls eines Temperaturbereichs wird aus dem Rohöl, dem Formationswasser, gegebenenfalls dem Gas der Lagerstätte und einem geeignet scheinenden carboxymethylierten Oxethylat der o. a. Formel orientierend die PIT gemessen. Diese Messung ist gegebenenfalls mit weiteren Tensiden dieser Klasse und gegebenenfalls Zusätzen zu wiederholen.

Auf der Basis der Meßergebnisse erfolgt das Maßschneidern des carboxymethylierten Oxethylats, dessen ölmobilisierende Wirksamkeit für das betreffende Lagerstättensystem durch einen oder mehrere Vorversuche in einer Sandschüttung als Modellformation oder an Original- bzw. Modellbohrkernen verifiziert werden kann.

Die carboxymethylierten Oxethylate bieten aufgrund ihrer chemischen Struktur mehrere Ansatzpunkte für die « Molekulararchitektur » mit dem Ziel, in einem System eine gewünschte Phasen-Inversions-Temperatur einzustellen. Es sind dies der hydrophobe Rest R, die Oxethylierungsgrade m und n sowie der Carboxymethylierungsgrad. Der Einfluß der einzelnen Strukturparameter auf die Phasen-Inversions-

Temperatur wurde bereits dargestellt (vgl. D. Balzer loc. cit.). Es gilt die Gesetzmäßigkeit, nach der eine Verstärkung der Hydrophobie des Tensidions die Phasen-Inversions-Temperatur erniedrigt und eine Vergrößerung der Hydrophilie sie erhöht. Eine Verlängerung des hydrophoben Restes oder eine Vergrößerung von m führen damit zur Erniedrigung und eine Vergrößerung von n oder eine Erhöhung des Carboxymethylierungsgrades zu einer Erhöhung der Phasen-Inversions-Temperatur. Dies Abhängigkeiten sind teilweise sehr stark ausgeprägt und gestatten eine optimale Anpassung der carboxymethylierten Oxethylate an die Bedingungen der jeweiligen Lagerstätte.

Erfindungsgemäß wird das Tensid nun sowohl als Emulsion als auch als Lösung oder Dispersion in die Lagerstätte injiziert. Da Emulsionen definitionsgemäß Dispersionen sind, soll hier unter einer Emulsion eine Verteilung verstanden werden, bei der eine der Flüssigkeiten Rohöl, ein Kohlenwasserstoff, ein Rohöl-Kohlenwasserstoffgemisch oder ein Kohlenwasserstoffgemisch ist. Die Tensiddispersion hingegen enthält kein Rohöl oder Kohlenwasserstoff.

Die zu injizierende Emulsion kann aus dem Original-Rohöl, dem Formationswasser, dem Tensid sowie gegebenenfalls Zusätzen nach den gängigen Verfahren der Emulsionszubereitung hergestellt werden (vgl. P. Becher, Emulsions Theory and Practice, New York, 1965), wobei keine sonderlich hohen Scherkräfte benötigt werden. Es ist auch möglich, das Gemisch, bestehend aus Öl, Wasser, Tensid sowie gegebenenfalls Zusätzen, bis zur PIT zu erwärmen, und die sich dann bei mildem Rühren bildende, aus sehr feinen Tröpfchen bestehende Emulsion durch schnelles Abkühlen zu stabilisieren. Die Emulsionen sind bei Temperaturen $\geq 15\,^{\circ}C$ unterhalb der PIT relativ stabil, gegebenenfalls empfiehlt sich leichtes Rühren im Vorratsgefäß.

Statt des Original-Rohöls können zur Herstellung der erfindungsgemäßen Emulsion auch andere Rohöle, Rohölgemische, teilweise raffinierte Rohölfraktionen, Gasöle, Kerosin oder Benzine sowie deren Gemische mit Rohöl verwendet werden. Geeignet als organische Phase der erfindungsgemäßen Emulsion sind auch Gemische aus reinen Kohlenwasserstoffen ; aus wirtschaftlichen Überlegungen werden sie jedoch kaum eingesetzt werden.

Nach oder vor der Emulsion wird erfindungsgemäß eine Tensidlösung oder -dispersion in die Lagerstätte injiziert. Es kann auch nützlich sein, eine abwechselnde Folge von Emulsions- und Tensidslugs zu injizieren. Im allgemeinen wird der überwiegende Teil des Tensids oder der Tenside als Dispersion oder Lösung injiziert.

Das (die) Volumen der zu injizierenden Emulsion(en), ihr(e) Phasenverhältnis(se), die Tensidkonzentration(en), eventuelle Zusätze und das (die) Volumen der zu injizierenden Dispersion(en) oder Lösung(en), ihre Tensidkonzentration(en) und eventuelle Zusätze, sowie die Reihenfolge von Emulsion(en) und Dispersion(en) bzw. Lösung(en) und ferner die Art und Größe der die Mobilität kontrollierenden Polymerlösung können anhand von Modellflutversuchen möglichst an Originalbohrkernen optimiert werden.

Aufgrund dieser Vorversuche werden Emulsion(en) und Dispersion(en) bzw. Lösung(en) mit Injektionspumpen in die Lagerstätte eingebracht. Dies geschieht im allgemeinen in Form von Slugs, d. h. eines eng begrenzten Volumens von 0,01 bis 2 PV (= Porenvolumen der Lagerstätte), vorzugsweise 0,02 bis 1,2 PV. Die Größe der einzelnen Slugs richtet sich vor allem nach der Tensidkonzentration und nach der Wirtschaftlichkeit. Die Emulgatorkonzentration, bezogen auf die wäßrige Phase beträgt im allgemeinen 0,1 bis 30 %, vorzugsweise 0,5 bis 15 %. Das (die) Phasenverhältnis(se) der Emulsion(en) Öl/Wasser wird (werden) im allgemeinen 1 : 20 bis 4 : 1 sein, vorzugsweise liegen die Phasenverhältnisse zwischen 1 : 8 bis 2 : 1. Die Tensidkonzentration der Tensidlösung oder -dispersion beträgt 0,1 bis 30 %, vorzugsweise 0,2 bis 15 %. Das Volumen des dem Tensidslug voran- oder nachgefluteten Emulsionsslugs sollte sich zum Volumen des Tensidslugs verhalten wie 1 : 60 bis 2 : 1, vorzugsweise 1 : 20 bis 1 : 2. Sollte die mittlere Flüssigkeit eine Emulsion sein, gelten die gleichen Volumenverhältnisse.

Zweckmäßigerweise wird vor der Injektion der Tensidflüssigkeiten mit Wasser geflutet, wobei als Flutwasser vorzugsweise das produzierte Formationswasser eingesetzt wird. In speziellen Fällen kann es zweckmäßig sein, mit einem Wasser anderer Zusammensetzung als der des Formationswassers zu fluten. Dies kann logistische Gründe haben, oder es empfiehlt sich, die Lagerstätte hinsichtlich einer bestimmten Salinität zu konditionieren. Die Größe des Flutwasserslugs beträgt 0,01 bis 4 PV, vorzugsweise 0,1 bis 1 PV.

Aus Gründen einer günstigeren Viskositätsanpassung der Tensidflüssigkeiten an das Öl der Lagerstätte oder zur Verminderung der Tensid- bzw. gegebenenfalls der Polymerretention kann es sinnvoll sein, dem Tensid- bzw. dem Polymerslug ein- und mehrwertige Alkohole als Cosurfactants zuzufügen. Geeignete Cosurfactants sind z. B. i-Propanol, i-Butanol, n-Butanol, t-Amylalkohol, 2-Ethylhexanol, Butyldiglykol, Butyltriglykol etc.

Sowohl aus Gründen der Mobilitätskontrolle als auch zum Schutz der Tensidflüssigkeiten vor eindringendem Flutwasser kann man nach der letzten Tensidflüssigkeit Polymerlösung in die Lagerstätte injizieren. Hierzu wird ein Polymer oder ein Polymergemisch in einer solchen Konzentration in dem Flutwasser gelöst, daß die Viskosität 1, 2 bis 10 mal so hoch ist wie die des Öls unter Lagerstättenbedingungen. Bei Lagerstätten mittlerer und höherer Salinität (1 bis 25 % Gesamtsalinität) kommen hier insbesondere Biopolymere oder Cellulosederivate, die in Gegenwart der erhöhten Salzkonzentrationen noch eine ausreichende Viskosität besitzen und keine Fällungen zeigen, infrage.

Zweckmäßigerweise schließt sich an das Injizieren der Polymerlösung normales Wasserfluten als

Trieb an. Dieses wird solange fortgesetzt, wie sich wirtschaftlich Öl gewinnen läßt.

Die nachfolgenden Beispiele sollen das erfindungsgemäße Verfahren erläutern :

Beispiel 1

(Prozente bedeuten Gewichtsprozente, wenn nicht anders angegeben)

Zur Herstellung der künstlichen Formation wurde ein thermostatisierbares Hochdruckrohr von 70 cm Länge und 5 cm Durchmesser, versehen mit Temperaturmeßeinrichtung und Manometer, beidseitig verschließbar durch Gewindeverschlüsse mit Kapillareingang und Druckhalteventilausgang mit kantengerundetem Quarzsand beschickt. Sodann wurde die Sandschüttung mittels einer Hochdruckdosierpumpe mit Formationswasser A gesättigt und durch einen Thermostaten die gewünschte Temperatur eingestellt. Mit Hilfe eines Drucktransmitters wurde die Permeabilität der Sandschüttung bestimmt. Sodann erfolgte die Sättigung mit Rohöl A, wobei gleichzeitig der Haftwassergehalt gemessen wurde. Anschließend wurde mit einer Geschwindigkeit von ca. 1,5 m/d (m/Tag) Flutwasser injiziert. Als solches diente Formationswasser A. Nach Einpressen von ca. 1,5 PV Flutwasser (1 PV ca. 800 ml), wobei sich ein Verwässerungsgrad der produzierten Flüssigkeit von 98 bis 100 % einstellte, wurden nacheinander

0,05 PV einer Emulsion,
0,1 PV einer Tensiddispersion,
0,4 PV einer Polymerlösung und
abschließend ca. 1,5 PV Formationswasser A

jeweils mit einer Flutgeschwindigkeit von ca. 1 m/d (d = Tage) injiziert. Die Emulsion bestand aus Rohöl A und Formationswasser A (Phasenverhältnis 1 : 1) sowie 6,6 % (bezogen auf die wäßrige Phase) carboxymethyliertes Nonylphenoloxethylat Natriumsalz mit ca. 6 Mol Ethylenoxid und einem Carboxymethylierungsgrad von ca. 75 %. Die Tensiddispersion bestand aus Formationswasser A und dem gleichen Tensid ebenfalls mit 6,6 %. Das Polymer des Mobilitätspuffers was Cellobond HEC 100 000 A, BP Chemicals, Konzentration 0,25 %. Das Formationswasser A enthielt pro 1 ca. 200 g NaCl, 1 g KCl, 12 g $CaCl_2$ und 4 g $MgCl_2$. Rohöl A ist paraffinbasisch und hat eine Dichte von 0,86 g/cm$^3$. Die Formationstemperatur betrug 51 °C, die Phasen-Inversions-Temperatur des Öl-Wasser-Tensid-Systems 56 °C.

Die künstliche Formation hatte eine Porosität von ca. 47 %, ihre Permeabilität betrug 3 D (Darcy) und der Haftwassergehalt ca. 25 %. Durch das Wasserfluten wurde eine Entölung von 71 % erzielt, weitere 29 % Öl wurden durch das eingepreßte Tensid freigesetzt, so daß die Gesamtentölung 100 % des OIP-Wertes (Oil in place) waren. Nach dem Ausfluten der Ölbank brach das Tensid durch. Weiteres Öl wurde als Emulsion freigesetzt. Während der Förderung der Ölbank wurde ein Druckgradient von maximal 0,5 bar/m gemessen ; der maximale Ölgehalt der Bank betrug ca. 50 %. Bei der Analytik des Porenraums wurden 2,2 g Tensid oder 0,9 mg/g Sand und 25 ml Öl nachgewiesen. 20 ml Öl waren als Emulsion injiziert worden.

Beispiel 2 (Vergleichsbeispiel)

In diesem Beispiel wird die Tertiärentölung durch normales Tensidfluten bewirkt. Eine Formation wie in Beispiel 1 wurde mit Formationswasser A benetzt und mit Rohöl A gesättigt (Porosität 47 %, Permeabilität 1, 2 D, Haftwassergehalt 27 %). Die Versuchstemperatur betrug 51 °C. Es wurde zunächst mit Formationswasser A geflutet, wobei eine Entölung von 79 % erreicht wurde. Durch die sich anschließende Injektion von 0,2 PV Tensidflüssigkeit (6,6 % des gleichen Tensids wie in Beispiel 1 in Formationswasser A) gefolgt von dem gleichen Mobilitätspuffer wie in Beispiel 1 wurden weitere 19 % OIP freigesetzt. Der maximale Ölgehalt der Ölbank betrug ca. 40 %, der maximale Druckgradient 0,6 bar/m (Flutgeschwindigkeit ca. 1 m/d). Nach Ausfluten der Ölbank brach das Tensid durch. Bei der Analytik der künstlichen Formation wurden 25 ml Öl und 7,5 g Tensid (3,2 mg/g Sand) festgestellt. Die Menge des retendierten Tensids ist also in diesem Beispiel viel höher als im erfindungsgemäßen Beispiel 1.

Beispiel 3 (Vergleichsbeispiel)

In diesem Beispiel wird die Tertiärentölung durch Emulsionsfluten erzielt.

Eine Formation wie in Beispiel 1 wurde mit Formationswasser A benetzt und mit Rohöl A gesättigt (Porosität 47 %, Permeabilität 1,1 D, Haftwassergehalt 25 %). Die Versuchstemperatur betrug 51 °C. Durch Wasserfluten mit Formationswasser A wird eine Entölung von 76 % erreicht. 0,3 PV anschließend injizierte Emulsion, bestehend aus Rohöl A, Formationswasser A (1 : 1) 6 % (bezogen auf die wäßrige Phase) des gleichen Tensids wie in Beispiel 1, gefolgt von dem gleichen Mobilitätspuffer wie in Beispiel 1, bewirken die Freisetzung um weitere 24 % OIP, wobei die Ölbank maximal 50 % Öl enthält. Anschließend brach das Tensid durch, wobei weiteres Öl als Emulsion ausgeflutet wurde. Der maximale Druckgradient

während des Transportes der Ölbank betrug 0,9 bar/m.

Bei der analytischen Untersuchung des Porenraums wurden 3,6 g Tensid (1,4 mg/g Sand) und 64 ml Öl nachgewiesen. Obwohl die Förderung des OIP ca. 100 %ig war, wurde eine beträchtliche Menge des als Emulsion eingefluteten Öls im Porenraum festgehalten. Die Bilanz von resultierender Entölung bei gleicher oder sogar ungünstigerer Tensidretention ist in diesem Beispiel deutlich weniger vorteilhaft als bei dem erfindungsgemäßen Beispiel 1.

Beispiel 4

Eine künstliche Formation wie in Beispiel 1 (Porosität 47 %, Permeabilität 1,7 D, Haftwassergehalt 30 %, Temperatur 51 °C, benetzt mit Formationswasser A, gesättigt mit Rohöl A) wurde durch Wasserfluten zu 78 % entölt. Anschließend wurden nacheinander injiziert :

0,05 PV einer Emulsion, bestehend aus Formationswasser A, Rohöl A, Phasenverhältnis 1 : 1,2 % (bezogen auf die wäßrige Phase) des gleichen Tensids wie in den vorangehenden Beispielen,

0,15 PV einer 2 %igen Tensidflüssigkeit aus diesem Tensid in Formationswasser A,

0,4 PV HEC 100 000 A 0,25 %ig in Formationswasser und

ca. 1,5 PV Formationswasser als Trieb.

Hierdurch wurden weitere 22 % OIP freigesetzt, so daß die Formation zu 100 % OIP entölt wurde. Es wurde ein maximaler Druckgradient von 0,7 bar/m gemessen, die Flutgeschwindigkeit betrug ca. 1 m/d.

Bei der analytischen Untersuchung des Porenraums ergab sich eine Tensidretention von 1,6 g (oder 0,6 mg/g Sand) und eine Ölmenge von 25 ml. Etwa 20 ml Öl waren in Form der Emulsion eingepreßt worden.

Beispiel 5

Bei einer künstlichen Formation wie in Beispiel 1 (Porosität 46 %, Permeabilität 2,6 D, Haftwassergehalt 30 %, benetzt mit Formationswasser A, gesättigt mit Rohöl A, Temperatur 49 °C) wurden durch Wasserfluten 79 % OIP freigesetzt. Anschließend wurden nacheinander eingepreßt :

0,05 PV einer Emulsion, bestehend aus Formationswasser A, Rohöl A, Phasenverhältnis 1 : 1 und 5 % (bezogen auf die wäßrige Phase) eines carboxymethylierten Alfol-1214-Oxethylats mit ca. 4,5 Mol Ethylenoxid/Mol und einem Carboxymethylierungsgrad von ca. 75 %, 0,1 PV des gleichen Tensids in gleicher Konzentration in Formationswasser A,

0,4 PV HEC 100 000 A, 0,25 % in Formationswasser und

ca. 1,5 PV Formationswasser als Trieb.

Die Phasen-Inversions-Temperatur des Systems Formationswasser/Rohöl/Tensid lag bei 53 °C.

Durch die Wirkung des Tensids ließen sich weitere 20 % OIP freisetzen, so daß die Gesamtentölung bei 99 % OIP lag. Der maximale Druckgradient bei einer Flutgeschwindigkeit von 1,1 m/d war 0,6 bar/m.

Bei der anschließenden analytischen Untersuchung des Porenraums wurden 2,4 g Tensid (oder 1 mg/g Sand) und 31 ml Öl nachgewiesen.

Beispiel 6

Bei einer künstlichen Formation ähnlich Beispiel 1 (Porosität 48 %, Permeabilität 1,6 D, Haftwassergehalt ca. 30 %, benetzt mit Formationswasser A, gesättigt mit Rohöl A), die jedoch 140 cm lang ist und auf 56 °C temperiert wurde, ließen sich durch Wasserfluten 78 % OIP freisetzen. Anschließend wurden nacheinander injiziert :

0,05 PV einer Emulsion, bestehend aus Rohöl A, Formationswasser A und 5 % (bezogen auf die wäßrige Phase) carboxymethyliertes Nonylphenoloxethylat mit ca. 6 Mol Ethylenoxid/Mol und einem Carboxymethylierungsgrad von ca. 100 %,

0,1 PV einer Tensiddispersion, bestehend aus 5 % des gleichen Tensids in Formationswasser A,

0,4 PV Mobilitätspuffer wie in den vorangehenden Beispielen und

ca. 1 PV Formationswasser A als Trieb.

Die Phasen-Inversions-Temperatur des Systems Rohöl/Formationswasser/Tensid lag bei 63 °C. Durch das Tensid wurden weitere 22 % OIP freigesetzt, so daß die Gesamtentölung bei 100 % OIP lag. Anschließend an die Ölbank mit einem maximalen Ölgehalt von ca. 50 % brach das Tensid durch, wobei zusätzlich Öl als Emulsion freigesetzt wurde. Ein maximaler Druckgradient von 0,5 bar/m wurde gemessen.

Bei der anschließenden analytischen Untersuchung der künstlichen Formation wurden 4,3 g Tensid bzw. 0,9 mg/g Sand und 51 ml Öl nachgewiesen. Bei dem — verglichen mit den anderen Beispielen — doppelt so großen Porenraum waren 41 ml Öl als Emulsion injiziert worden.

Beispiel 7

Eine künstliche Formation wie in Beispiel 1 (Porosität 47 %, Permeabilität 1,8 D, Wassergehalt 18 %, Temperatur 51 °C, mit Formationswasser A benetzt und mit Rohöl A gesättigt) wurde wassergeflutet,

wobei sich eine Entölung von 76 % OIP ergab. Anschließend wurden folgende Flüssigkeiten injiziert :

0,05 PV einer Emulsion, bestehend aus Rohöl A, Formationswasser A (Phasenverhältnis 1 : 1) und 2,5 % (bezogen auf die wäßrige Phase) des gleichen Tensids wie in Beispiel 1, dem hier jedoch 20 % (bezogen auf die Tensidmenge) Isobutanol zugesetzt wurden,

0,15 PV einer Tensidflüssigkeit des gleichen Tensids und Cotensids in gleicher Konzentration,

0,4 PV Polymerlösung wie in Beispiel 1 und sodann

ca. 1 PV Formationswasser A als Trieb.

Die Phasen-Inversions-Temperatur des Systems Rohöl/Formationswasser/Tensid/Cotensid lag bei 55 °C.

Durch die Wirkung des Tensids wurden weitere 19 % OIP freigesetzt, wodurch die Gesamtentölung auf 95 % OIP anstieg. Bei einer Flutgeschwindigkeit von 1,3 m/d betrug der maximale Druckgradient 1 bar/m. Die Porenraumanalyse zeigt einen Tensidgehalt von 2,5 g oder 1,1 mg/g Sand und einen Ölgehalt von 46 ml Öl an.

## Beispiel 8

Eine Formation wie in Beispiel 1 (Porosität 47 %, Permeabilität 1,8 D, Haftwassergehalt 20 %, Temperatur 51 °C, mit Formationswasser A benetzt und Rohöl A gesättigt) wurde wassergeflutet, wobei sich eine Entölung von 75 % ergab. Anschließend wurden nacheinander injiziert :

0,05 PV einer Emulsion, bestehend aus Rohöl A, Formationswasser A (Phasenverhältnis 1 : 2) und 3,5 % (bezogen auf die wäßrige Phase) des gleichen Tensids wie in Beispiel 1,

0,1 PV wäßrige Tensidflüssigkeit des gleichen Tensids in gleicher Konzentration,

0,4 PV Polymerlösung wie in Beispiel 1 und

ca. 1,5 PV Formationswasser A.

Durch die Wirkung des Tensids wurden weitere 21 % OIP freigesetzt, so daß die Gesamtentölung auf 96 % OIP anstieg. Anschließend brach das Tensid durch. Bei einer Flutgeschwindigkeit von ca. 1 m/d wurde ein maximaler Druckgradient von ca. 0,8 bar/m gemessen. Bei der anschließenden Analyse der künstlichen Formation ergab sich ein Tensidgehalt von 1,9 g (oder 0,8 mg/g Sand) und ein Ölgehalt von 31 ml. 12 ml Öl waren als Emulsion eingepreßt worden.

## Beispiel 9

In diesem Beispiel wird gezeigt, daß auch ein dem Tensidslug nachgefluteter Emulsionsslug gegenüber dem reinen Emulsionsfluten oder Tensidfluten von Vorteil ist.

Bei einer künstlichen Formation wie in Beispiel 1 (Porosität 46 %, Permeabilität 1,4 D, Haftwassergehalt 25 %, Temperatur 51 °C, mit Formationswasser A benetzt und mit Rohöl A gesättigt) wurde durch Wasserfluten eine Entölung von 75 % erreicht. Anschließend wurden nacheinander injiziert :

0,1 PV einer Tensiddispersion von 5 % des in Beispiel 1 verwendeten Tensids in Formationswasser A,

0,1 PV einer Emulsion, bestehend aus Rohöl A, Formationswasser A (Phasenverhältnis 1 : 1) und 5 % (bezogen auf die wäßrige Phase) des gleichen Tensids,

0,4 PV der Polymerlösung von Beispiel 1 und

ca. 1,5 PV Formationswasser.

Durch die Wirkung des Tensids werden weitere 24 % OIP freigesetzt, so daß die Gesamtentölung auf 99 % OIP ansteigt. Nach dem Ausfluten der Ölbank bricht das Tensid durch. Der Druckgradient nimmt bei einer Flutgeschwindigkeit von 0,8 m/d Beträge von maximal 0,5 bar/m an.

Die Untersuchungen des Porenraums ergaben eine Tensidretention von 2,4 g (oder 1 mg/g Sand) und einen Ölgehalt von 34 ml. Als Emulsion waren 20 ml Öl injiziert worden.

## Beispiel 10

Mit diesem Beispiel soll gezeigt werden, daß das zur Herstellung der Emulsion notwendige Rohöl — falls nicht ausreichend verfügbar — auch durch ein gezielt hergestelltes Kohlenwasserstoffgemisch ersetzt werden kann.

Entsprechend dem Massenverhältnis an paraffinischem und naphthenischem Anteil in Rohöl A wurde aus n-Dodecan und Cyclooctan ein Gemisch hergestellt. Diesem wurde soviel Toluol zugemischt, bis eine mit dem Formationswasser A und dem in Beispiel 1 genannten Tensid hergestellte Emulsion die gleiche Phasen-Inversions-Temperatur (56 °C) anzeigt wie das Rohöl A. Das auf diese Weise hergestellte Modellöl setzt sich aus 79 % n-Dodecan, 13 % Cyclooctan und 8 % Toluol zusammen.

Eine künstliche Formation wie in Beispiel 1 (Porosität 47 %, Permeabilität 1,1 D, Haftwassergehalt 26 %, Temperatur 51 °C, benetzt mit Formationswasser A und gesättigt mit Rohöl A) wurde mit Formationswasser erschöpfend geflutet, wobei sich ein Entölungsgrad von 76 % OIP einstellt. Anschließend wurden nacheinander injiziert :

0,05 PV einer Emulsion, bestehend aus Formationswasser A, Modellöl (Phasenverhältnis 1 : 1) und 5 % (bezogen auf die wäßrige Phase) des in Beispiel 1 verwendeten Tensids,

0,1 PV Tensiddispersion des gleichen Tensids in gleicher Konzentration in Formationswasser A,

0,4 PV Polymerlösung wie in Beispiel 1 und

ca. 1,5 PV Formationswasser.

Durch die Wirkung des Tensids wurden weitere 23 % OIP freigesetzt, so daß die Gesamtentölung 99 % OIP betrug. Nach Ausfluten der Bank brach das Tensid durch. Der Ölgehalt der Bank lag bei maximal ca. 50 %. Bei einer Flutgeschwindigkeit von ca. 1 m/d wurde ein Druckgradient von 1,4 bar/m gemessen.

Analytisch wurde im Porenraum eine Tensidretention von 3,5 g (oder 1,4 mg/g Sand) und ein Ölgehalt von 20 ml nachgewiesen. Die gleiche Menge Modellöl war als Emulsion eingepreßt worden.

## Beispiel 11

Dieses und das folgende Beispiel zeigen die Anwendung des erfindungsgemäßen Verfahren auf andere Lagerstättensysteme.

Das Formationswasser B besitzt folgende Zusammensetzung (g/l) Na 38, K 0,4, Ca 8, Mg 1,5, Sr 0,4 und Cl 80. Das Rohöl B besteht zu 58 % aus Paraffin, zu 26 % aus Naphthenen und zu 16 % aus Aromaten. Die Dichte beträgt 0,85 $g/cm^3$.

Eine künstliche Formation ähnlich der in Beispiel 1 (Porosität 47 %, Permeabilität 1,5 D, Haftwassergehalt 27 %), jedoch mit einer Temperatur von 38 °C, benetzt mit Formationswasser B und gesättigt mit Lagerstättenöl B wurde erschöpfend mit Formationswasser geflutet, wobei ein Entölungsgrad von 77 % erreicht wurde. Der Verwässerungsgrad lag bei etwa 99 %. Anschließend wurden folgende Flüssigkeiten injiziert :

0,05 PV einer Emulsion, bestehend aus Rohöl B, Formationswasser B (Phasenverhältnis 1 : 1) und 2 % (bezogen auf die wäßrige Phase) carboxymethyliertes Nonylphenoloxethylat mit 4,9 Mol Ethylenoxid/Mol mit einem Carboxylierungsgrad von 100 %,

0,15 PV des gleichen Tensids in gleicher Konzentration in Formationswasser B,

0,4 PV des gleichen Polymers wie in Beispiel 1 in Formationswasser B und

ca. 1,5 PV Formationswasser.

Die Phasen-Inversions-Temperatur des Systems Rohöl/Formationswasser/Tensid lag hier bei 45 °C.

Durch die Wirkung des Tensids wurden weitere 23 % OPI freigesetzt, so daß die Gesamtentölung 100 % OIP beträgt. Der maximale Ölgehalt der Ölbank betrug ca. 55 %, es wurde ein maximaler Druckgradient (Flutgeschwindigkeit ca. 1 m/d) von 1,1 bar/m gemessen.

Bei der anschließenden analytischen Untersuchung des Porenraums wurden 1,5 g Tensid (oder 0,6 mg/g Sand) und 38 ml Öl nachgewiesen.

## Beispiel 12

Das Formationswasser C besitzt etwa folgende Zusammensetzung : 24,4 g/l NaCl, 0,13 g/l KCl, 0,45 g/l $CaCl_2$, 0,35 g/l $MgCl_2$ und 0,03 g/l $SrCl_2$. Das Rohöl C besteht zu 40 % aus naphthenischen, zu 35 % aus paraffinischen und zu 25 % aus aromatischen Kohlenwasserstoffen. Die Dichte beträgt ca. 0,9 $g/cm^3$.

Eine künstliche Formation ähnlich der in Beispiel 1 (Porosität 46 %, Permeabilität 1,5 D, Haftwassergehalt 23 %, jedoch bei einer Temperatur von 63 °C, benetzt mit Formationswasser C und gesättigt mit Rohöl C wurde erschöpfend wassergeflutet, wobei sich eine Entölung von 78 % OIP einstellt. Anschließend wurden nacheinander injiziert :

0,05 PV einer Emulsion, bestehen aus Rohöl C, Formationswasser C (Phasenverhältnis 1 : 1) und 6 % (bezogen auf die wäßrige Phase) carboxymethyliertem Nonylphenoloxethylat mit 3 Mol Propylenoxid/Mol und 5,7 Mol Ethylenoxid/Mol, entsprechend der Formel $C_9H_{19}—C_6H_4O(C_2H_3(CH_3)O)_3(C_2H_4O)_{5.7}CH_2COONa$, der Carboxymethylierungsgrad beträgt ca. 70 %,

0,1 PV des gleichen Tensids in der gleichen Konzentration in Formationswasser C,

0,4 PV des gleichen Polymers wie in Beispiel 1 in Formationswasser C und

ca. 1,5 PV Formationswasser.

Die Phasen-Inversions-Temperatur des Systems Rohöl/Formationswasser/Tensid betrug 68 °C.

Durch die Wirkung des Tensids wurden weitere 18 % OIP freigesetzt, wobei der maximale Ölgehalt der Ölbank ca. 45 % betrug. Es wurde bei einer Flutgeschwindigkeit von ca. 0,9 m/d ein maximaler Druckgradient von ca. 0,6 bar/m gemessen.

Bei der Porenraumanalyse wurden 3,1 g Tensid (oder 0,9 mg/g Sand) und 50 ml Öl nachgeweisen.

## Beispiel 13

Als Modellformation wurde in diesem Beispiel ein zylindrischer Kern aus Bentheimer Sandstein mit einem Durchmesser von ca. 8 und einer Länge von ca. 50 cm verwendet. Er wurde in Epoxidharz eingebettet, seine Endseiten mit mittels 0-Ringen gedichteter Metallflansche verschlossen. Die Versuchstemperatur betrug 56 °C. Nach Benetzung der Formation mit Formationswasser A, Bestimmung des Porenvolumens (575 ml) und der Permeabilität (1 100 mD) wurde mit Rohöl A gesättigt (Haftwasser 20 %). Durch erschöpfendes Fluten mit Formationswasser A wurden 51 % OIP freigesetzt. Anschließend wurden nacheinander injiziert :

0,05 PV einer Emulsion, bestehend aus Formationswasser A, Rohöl A, Phasenverhältnis 1 : 1 und 3 % eines carboxymethylierten Dinonylphenoloxethylats mit ca. 12 Mol EO/Mol und einem Carboxymethylierungsgrad von ca. 85 %,

0,15 PV Tensiddispersion des gleichen Tensids in gleicher Konzentration in Formationswasser A,

0,4 PV Polymerlösung wie in Beispiel 1 und ca.

1 PV Formationswasser.

Durch die Wirkung des Tensids (PIT 59 °C) wurden weitere 34 % OIP freigesetzt, so daß die Gesamtentölung 84 % OIP betrug. Nach Ausfluten der Ölbank brach das Tensid durch. Der Ölgehalt der Bank lag bei maximal 65 %. Bei einer Flutgeschwindigkeit von ca. 0,5 m/d wurde ein maximaler Druckgradient von 1,2 bar/m gemessen.

Analytisch wurden im Porenraum eine Tensidretention von 2,1 g oder 0,4 mg/g Sand nachgewiesen.

**Patentansprüche**

1. Verfahren zur Gewinnung von Öl aus Speichergestein mittlerer oder hoher Salinität durch nacheinander erfolgendes Einpressen von mindestens 2 tensidhaltigen Flüssigkeiten, dadurch gekennzeichnet, daß entweder die vorangeflutete oder die nachgeflutete oder bei 3 Flüssigkeiten die voran- und die nachgeflutete bzw. die mittlere Flüssigkeit Emulsionen sind, bestehend aus einer Ölphase, einer wäßrigen Phase und einem carboxymethylierten Oxethylat als Emulgator, das so ausgewählt wird, daß die Phasen-Inversions-Temperatur des Systems Mineralöl, bevorzugt Lagerstättenöl/Flutwasser/Emulgator/gegebenenfalls Zusätze 0 bis 10 °C oberhalb der Lagerstättentemperatur liegt, während die andere(n) Injektionsflüssigkeit(en) entweder (eine) Lösung(en) oder Dispersion(en) von carboxymethyliertem Oxethylat in Flutwasser ist (sind), wobei dieses (diese) Tensid(e) ebenfalls so ausgewählt wird (werden), daß die Phasen-Inversions-Temperatur des Systems Lagerstättenöl/Flutwasser/Tensid/gegebenenfalls Zusätze, gemessen bei einem Vol.-Verhältnis Wasser zu Öl wie 1 : 1 bis 1 : 3 und einer Tensidkonzentration von 1 bis 2 Gewichtsprozent, 0 bis 10 °C oberhalb der Lagerstättentemperatur liegt.

2. Verfahren nach Anspruch 1, dadurch gekennzeichnet, daß als Emulgatoren und Tenside carboxymethylierte Oxethylate der Formel

$$R{-}(OC_3H_6)_m(OC_2H_4)_nOCH_2COOM,$$

in der R einen linearen oder verzweigten aliphatischen Rest mit 6 bis 20 Kohlenstoffatomen oder einen alkylaromatischen Rest mit 3 bis 18 Kohlenstoffatomen in der Alkylgruppe oder einen dialkylaromatischen Rest mit 1 bis 18 Kohlenstoffatomen pro Alkylkette, wobei die Gesamtzahl der Kohlenstoffatome in beiden Alkylketten 5 bis 30 sein soll, oder einen trialkylaromatischen Rest mit 1 bis 18 Kohlenstoffatomen pro Alkylkette, wobei die Gesamtzahl der Kohlenstoffatome in den 3 Alkylketten 6 bis 40 sein soll, m 0 bis 20, n 1 bis 20, M ein Alkali- oder Erdalkali-Metallion oder Ammonium bedeuten und der Carboxymethylierungsgrad zwischen 10 und 100 % liegt, verwendet werden.

3. Verfahren nach den Ansprüchen 1 und 2, dadurch gekennzeichnet, daß die nacheinander eingepreßten tensidhaltigen Flüssigkeiten dasselbe Tensid enthalten.

4. Verfahren nach den Ansprüchen 1 bis 3, dadurch gekennzeichnet, daß die nacheinander eingepreßten tensidhaltigen Flüssigkeiten Tenside mit verschiedener Struktur, jedoch etwa gleicher Phasen-Inversions-Temperatur des Systems Lagerstättenöl/Flutwasser/Tensid enthalten.

5. Verfahren nach den Ansprüchen 1 bis 4, dadurch gekennzeichnet, daß die Tensid- bzw. Emulgatorkonzentration 0,1 bis 30 % — bei Emulsionen bezogen auf die wäßrige Phase — beträgt.

6. Verfahren nach den Ansprüchen 1 bis 5, dadurch gekennzeichnet, daß das organische Phase das Rohöl der Lagerstätte verwendet wird.

7. Verfahren nach den Ansprüchen 1 bis 6, dadurch gekennzeichnet, daß das Volumenverhältnis organischer zu wäßriger Phase in der Emulsion 3 : 1 bis 1 : 10 ist.

8. Verfahren nach den Ansprüchen 1 bis 7, dadurch gekennzeichnet, daß die Sluggröße der tensidhaltigen Flüssigkeiten 0,01 bis 2 Porenvolumen beträgt.

9. Verfahren nach den Ansprüchen 1 bis 8, dadurch gekennzeichnet, daß dem Tensidslug ein kleinvolumiger Emulsionsslug vorangeflutet wird.

10. Verfahren nach den Ansprüchen 1 bis 9, dadurch gekennzeichnet, daß den tensidhaltigen Flüssigkeiten Zusätze zugefügt werden.

11. Verfahren nach Anspruch 10, dadurch gekennzeichnet, daß als Zusätze Cosurfactants wie ein- und mehrwertige Alkohole verwendet werden.

12. Verfahren nach den Ansprüchen 1 bis 11, dadurch gekennzeichnet, daß als Zusätze wasserlösliche, viskositätserhöhende Polymere verwendet werden.

13. Verfahren nach den Ansprüchen 1 bis 12, dadurch gekennzeichnet, daß vor der Injektion der ersten tensidhaltigen Flüssigkeit 0,05 bis 4 Porenvolumen Flutwasser in die Lagerstätte eingepreßt werden.

14. Verfahren nach den Ansprüchen 1 bis 13, dadurch gekennzeichnet, daß nach dem Injizieren der letzten tensidhaltigen Flüssigkeit Flutwasser in die Lagerstätte eingepreßt wird.

15. Verfahren nach Anspruch 14, dadurch gekennzeichnet, daß das Flutwasser ein wasserlösliches, viskositätserhöhendes Polymer enthält.

## Claims

1. A process for producing oil from reservoir rocks of medium or high salinity by successive injection of at least 2 liquids containing surfactant, characterized in that either the pre-flooding liquid or the post-flooding liquid or, in the case of 3 liquids, the pre-flooding and post-flooding liquid or the middle liquid is an emulsion consisting of an oil phase, an aqueous phase and a carboxymethylated oxyethylate as the emulsifier, the latter being so chosen that the phase inversion temperature of the system of mineral oil, preferably formation oil/flooding water/emulsifier/if desired, additives, is from 0 to 10 °C above the formation temperature, while the other injection liquid or liquids is or are a solution or solutions, or a dispersion or dispersions, of carboxymethylated oxyethylate in the flooding water, this surfactant or these surfactants also being so chosen that the phase inversion temperature of the system of formation oil/flooding water/surfactant/if desired, additives, measured at a water : oil volume ratio of from 1 : 1 to 1 : 3 and a surfactant concentration of from 1 to 2 % by weight is from 0 to 10 °C above the formation temperature.

2. A process according to Claim 1, characterized in that the emulsifiers and surfactants used are carboxymethylated oxyethylates of the formula

$$R—(OC_3H_6)_m(OC_2H_4)_n—OCH_2COOM,$$

where R is a linear or branched aliphatic radical having 6 to 20 carbon atoms or an alkylaromatic radical having 3 to 18 carbon atoms in the alkyl group or a dialkylaromatic radical having 1 to 18 carbon atoms per alkyl chain, the total number of carbon atoms in the two alkyl chains being from 5 to 30, or a trialkylaromatic radical having 1 to 18 carbon atoms per alkyl chain, the total number of carbon atoms in the 3 alkyl chains being from 6 to 40, m is from zero to 20, n is from 1 to 20, M is an alkali metal or alkaline earth metal ion or ammonium and the degree of carboxymethylation is from 10 to 100 %.

3. A process according to Claim 1 or 2, characterized in that the successively injected surfactant-containing liquids contain the same surfactant.

4. A process according to any of Claims 1 to 3, characterized in that the successively injected surfactant-containing liquids contain surfactants of different structure, but of approximately the same phase inversion temperature of the system of formation oil/flooding water/surfactant.

5. A process according to any of Claims 1 to 4, characterized in that the surfactant concentration respectively emulsifier concentration is from 0.1 to 30 %, based on the aqueous phase in the case of emulsions.

6. A process according to any of Claims 1 to 5, characterized in that the crude oil of the formation is used as the organic phase.

7. A process according to any of Claims 1 to 6, characterized in that the volume ratio of organic phase to aqueous phase in the emulsion is from 3 : 1 to 1 : 10.

8. A process according to any of Claims 1 to 7, characterized in that the slug size of the surfactant-containing liquids is from 0.01 to 2 pore volume.

9. A process according to any of Claims 1 to 8, characterized in that the surfactant slug is preceded by flooding with a small volume emulsion slug.

10. A process according to any of Claims 1 to 9, characterized in that additives are introduced into the surfactant-containing liquids.

11. A process according to Claim 10, characterized in that cosurfactants, such as monohydric and polyhydric alcohols, are used as additives.

12. A process according to any of Claims 1 to 11, characterized in that water-soluble polymers which increase the viscosity are used as additives.

13. A process according to any of Claims 1 to 12, characterized in that before injection of the first surfactant-containing liquid from 0.05 to 4 pore volumes of flooding water are injected into the formation.

14. A process according to any of Claims 1 to 13, characterized in that after injection of the last surfactant-containing liquid flooding water is injected into the formation.

15. A process according to Claim 14, characterized in that the flooding water contains a water-soluble polymer which increases the viscosity.

## Revendications

1. Procédé pour extraire du pétrole d'une roche réservoir de salinité moyenne ou élevée, par envoi successif sous pression d'au moins deux liquides renfermant un surfactif, caractérisé par le fait que soit les liquides injectés au préalable, soit les liquides injectés ensuite, ou, dans le cas de trois liquides, le liquide injecté en premier et celui injecté ensuite, ou le liquide intermédiaire, sont des émulsions

constituées par une phase de pétrole, par une phase aqueuse et par un oxéthylat carboxyméthylé en tant qu'émulsifiant, qui est choisi de manière que la température d'inversion des phases du système huile minérale, de préférence un mélange de pétrole de gisement, d'eau d'inondation, d'émulsifiant et éventuellement d'additifs, se situe de zéro à 10 °C au-dessus de la température du gisement, tandis que l'autre liquide d'injection ou les autres est une ou sont des solution(s) ou dispersion(s) de l'oxéthylat carboxyméthylé dans l'eau d'inondation, ce(s) surfactif(s) étant également choisi(s) de manière que la température d'inversion de phases du système constitué par le pétrole de gisement, l'eau d'inondation, le surfactif et éventuellement des additifs, mesurée pour un rapport volumétrique entre l'eau et le pétrole de 1 : 1 à 1 : 3 et à une concentration de surfactif de 1 à 2 % en poids, se situe de zéro à 10 °C au-dessus de la température du gisement.

2. Procédé selon la revendication 1, caractérisé par le fait que l'on utilise, comme émulsifiants et comme surfactifs, des oxéthylats carboxyméthylés de la formule

$$R—(OC_3H_6)_m(OC_2H_4)_nOCH_2COOM,$$

sans laquelle R représente un radical aliphatique linéaire ou ramifié comportant de 6 à 20 atomes de carbone ou un radical alkyl-aromatique comportant de 3 à 18 atomes de carbone dans le groupe alkyle, ou un radical dialkyl-aromatique comportant de 1 à 18 atomes de carbone par chaîne alkyle, le nombre total des atomes de carbone dans les deux chaînes alkyle devant être de 5 à 30, ou bien un radical trialkyl-aromatique comportant de 1 à 18 atomes de carbone, le nombre total des atomes de carbone dans les trois chaînes alkyle devant être de 6 à 40, m ayant une valeur de zéro à 20, n ayant une valeur de zéro à 20, M représentant un ion de métal alcalin ou alcalino-terreux, ou de l'ammonium, et le degré de carboxyméthylation étant compris entre 10 et 100 %.

3. Procédé selon les revendications 1 et 2, caractérisé par le fait que les liquides contenant des surfactifs, qui sont successivement injectés, renferment le même surfactif.

4. Procédé selon les revendications 1 à 3, caractérisé par le fait que les liquides contenant des surfactifs, qui sont successivement injectés, renferment des surfactifs de structure différente, mais sensiblement de la même température d'inversion de phases que celle du système constitué par le mélange de pétrole de gisement, d'eau d'inondation et de surfactif.

5. Procédé selon les revendications 1 à 4, caractérisé par le fait que la concentration du surfactif respectivement de l'émulsifiant, relativement à la phase aqueuse, est de 0,1 à 30 % dans le cas d'émulsions.

6. Procédé selon les revendications 1 à 5, caractérisé par le fait qu'on utilise, comme phase organique, le pétrole brut du gisement.

7. Procédé selon les revendications 1 à 6, caractérisé par le fait que la proportion volumétrique entre la phase organique et la phase aqueuse dans l'émulsion est de 3 : 1 à 1 : 10.

8. Procédé selon les revendications 1 à 7, caractérisé par le fait que la proportion d'injection des liquides renfermant du surfactif est de 0,01 à 2 % en volume.

9. Procédé selon les revendications 1 à 8, caractérisé par le fait que l'on injecte au préalable, avant la quantité de surfactif, une quantité d'émulsion de petit volume.

10. Procédé selon les revendications 1 à 9, caractérisé par le fait que l'on ajoute des additifs aux liquides renfermant des surfactifs.

11. Procédé selon la revendication 10, caractérisé par le fait que l'on utilise, comme additifs, des co-surfactifs tels que des mono- ou des poly-alcools.

12. Procédé selon les revendications 1 à 11, caractérisé par le fait que l'on utilise, comme additifs, des polymères solubles dans l'eau, élevant la viscosité.

13. Procédé selon les revendications 1 à 12, caractérisé par le fait qu'avant l'injection du premier liquide renfermant un surfactif, on injecte sous pression dans le gisement de 0,05 à 4 volumes de pores d'eau d'inondation.

14. Procédé selon les revendications 1 à 13, caractérisé par le fait qu'après l'injection du dernier liquide renfermant du surfactif, on injecte sous pression dans le gisement de l'eau d'inondation.

15. Procédé selon la revendication 14, caractérisé par le fait que l'eau d'inondation renferme un polymère soluble dans l'eau, élevant la viscosité.